(19) Europäisches Patentamt
European Patent Office
Office européen des brevets

(11) EP 3 057 003 A1

(12) EUROPEAN PATENT APPLICATION
published in accordance with Art. 153(4) EPC

(43) Date of publication:
17.08.2016 Bulletin 2016/33

(51) Int Cl.:
*G06F 17/30* $^{(2006.01)}$

(21) Application number: 14852479.6

(22) Date of filing: 06.10.2014

(86) International application number:
PCT/JP2014/076730

(87) International publication number:
WO 2015/053236 (16.04.2015 Gazette 2015/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 08.10.2013 JP 2013210793

(71) Applicant: National Institute of Information
and Communication Technology
Tokyo 184-8795 (JP)

(72) Inventors:
• KLOETZER, Julien
Koganei-shi
Tokyo 184-8795 (JP)
• TORISAWA, Kentaro
Koganei-shi
Tokyo 184-8795 (JP)
• HASHIMOTO, Chikara
Koganei-shi
Tokyo 184-8795 (JP)
• SANO, Motoki
Koganei-shi
Tokyo 184-8795 (JP)
• OH, Jonghoon
Koganei-shi
Tokyo 184-8795 (JP)
• OOTAKE, Kiyonori
Koganei-shi
Tokyo 184-8795 (JP)

(74) Representative: Vossius & Partner
Patentanwälte Rechtsanwälte mbB
Siebertstrasse 3
81675 München (DE)

(54) DEVICE FOR COLLECTING CONTRADICTORY EXPRESSION AND COMPUTER PROGRAM FOR SAME

(57) [Object] An object is to provide a device capable of efficiently collecting contradictory expressions in units smaller than a sentence.

[Solution] A contradictory expression collecting device includes: a first-stage contradiction pattern classifying unit extracting a pattern pair consisting of mutually contradictory patterns by machine learning using as training data pattern pairs consisting of patterns in the form of "subject X predicate object Y"; an additional contradiction pattern pair deriving unit 130 deriving a new pattern pair by rewriting one pattern of each extracted pattern pair by using entailment relation; a training data expanding unit for expanding training data by adding to the training data those of the newly derived pattern pairs which are highly likely consisting of mutually contradicting patterns; and an SVM 142 performing a second-stage classification classifying given pattern pairs to pattern pairs consisting of mutually contradictory patterns and to other pairs, based on machine learning using the expanded training data.

Fig. 4

EP 3 057 003 A1

**Description**

TECHNICAL FIELD

The present invention relates to a device for extracting contradictory expressions from a huge amount of texts and, more specifically, to a device for extracting, with high reliability, pairs of mutually contradicting expressions from a huge amount of texts.

BACKGROUND ART

If contradictory expressions can be detected from texts, its results may be used for various objects. By way of example, if mutually contradictory expressions can be detected in large bodies of texts, it will be possible to notify an author of the texts by marking such expressions. In a process of peer review of texts prepared by others, it will be possible to verify logical consistency thereof. If texts prepared by different authors are to be compared, it will be possible to confirm differences between assertions.

For example, many Japanese web pages claim that "agaricus prevents cancer". This has been generally accepted by many Japanese. If one searches articles on the Web using "agaricus", "cancer" and "promotes" as keywords, however, we can find reports claiming that "agaricus promotes cancer in rats." Some of these reports point to a study authorized by the Ministry of Health, Labor and Welfare reporting that a commercial product containing agaricus promoted cancer in rats. Existence of such reports contradict the assertion that agaricus is effective to prevent cancer, and encourages one interested in agaricus to further study about this subject.

At the time of a disaster, a huge amount of information is gathered on blogs, mini-blogs, social media and the like on networks. Such information is very useful to enable effective evacuation or timely aid delivery. It is noted, however, that such information often includes ungrounded pieces of information or false rumor. It is not easy at a glance to distinguish such pieces of information from correct pieces of information. Therefore, such pieces of information are not only useless to make good decision but also harmful in that they hinder proper circulation of information and possibly spreading damage or delaying recovery. If it is possible to analyze pieces of information on the network and to extract and present contradictory pieces of information to a user, it will help the user to sort out reliable and unreliable pieces of information. As a result, chaos at the time of emergency could be settled early.

The above examples suggest that recognizing contradictory information on a certain subject can guide users through further search to a true fact eventually. This relates not only to knowledge of facts but also to non-factual information that occupy most of our daily lives. By way of example, consider discussions on TPP (Trans Pacific Partnership). There is a big controversy whether Japan should join TPP. Quite serious but contradictory claims are plentiful, such as TPP will wipe out Japan's agricultural businesses and TPP will strengthen Japan's agricultural businesses. These are assertions or predictions that can be realized or disputed after the underlying decision-making is done: joining or refusing the TPP.

Furthermore, after reading different texts including contradictory assertions, one should notice that each of them is supported by a convincing theory that has no obvious defect. For example, we find claims "Exports of Japan's agricultural products will increase thanks to TPP" and "A large amount of low-price agricultural products will be imported to Japan due to the TPP." One of these predictions may just happen to be true because of unexpected reasons such as fluctuations in exchange rate of yen. We must survey such theories that support contradictory predictions, conduct balanced decision-making, and prepare counter measures for the expected problems after examining multiple viewpoints. Contradiction recognition should be useful to select documents to be surveyed in such situations.

CITATION LIST

NON PATENT LITERATURE

NPL 1: M. Ohki, S. Matsuyoshi, J. Mizuno, K. Inui, E. Nichols, K. Murakami, S. Masuda, and Y. Matsumoto. 2011. Recognizing confinement in web texts. In the Proceedings of the Ninth International Conference on Computational Semantics, page 215-224.

NPL 2: C. Hashimoto, K. Torisawa, S. De Saeger, J.-H. Oh, and J. Kazama. 2012. Excitatory or inhibitory: A new semantic orientation extracts contradiction and causality from the web. In Proceedings of EMNLP 2012.

SUMMARY OF INVENTION

TECHNICAL PROBLEM

Non-patent literature 1 listed above describes a study on such recognition of contradictory expressions. The study described in Non-patent literature 1 is directed to recognition of contradiction between sentences or in a document as a whole. In order to determine contradictory expressions with higher efficiency, however, a technique of recognizing contradictory expressions with smaller units is necessary. Such a technique will enable more efficient and more accurate recognition of contradictions between sentences or in a document as a whole.

Further, though examples described above are limited to Japanese, such a problem is common to all languages and not limited to Japanese.

Therefore, an object of the present invention is to provide a device for collecting contradictory expressions capable of efficiently collecting contradictory expressions in a unit smaller than a whole sentence.

Another object of the present invention is to provide a language-independent device for collecting contradictory expressions capable of efficiently collecting contradictory expressions in a unit smaller than a whole sentence.

SOLUTION TO PROBLEM

According to a first aspect, the present invention provides a device for collecting contradictory expressions used connected to entailment relation storage means for storing entailment relation of words and to a first storage device storing a plurality of binary pattern pairs. A binary pattern pair includes two binary patterns and each binary pattern includes a unary pattern as a sub pattern. The device for collecting contradictory expressions includes: first classifying means for extracting, by machine learning using as training data binary pattern pairs selected from the binary pattern pairs stored in the first storage device, mutually contradictory binary pattern pairs from the plurality of binary patterns stored in the first storage device; deriving means for applying, to each of the binary pattern pairs extracted by the first classifying means, the entailment relation stored in the entailment relation storage means, for rewriting one binary pattern and thereby for deriving a new binary pattern pair; training data expanding means for extracting, from the new binary patterns derived by the deriving means, binary pattern pairs highly possibly be consisting of mutually contradictory binary patterns and adding to the training data, for expanding the training data; and second classifying means for classifying, by machine learning using the expanded training data expanded by the training data expanding means, given binary pattern pairs to binary pattern pairs which are mutually contradictory and to those which are not.

Preferably, the device for collecting contradictory expressions is used further connected to polarity storage means for storing polarities of unary patterns. The first classifying means includes: first pattern pair extracting means for extracting, using the polarities of unary patterns stored in the polarity storage means, a binary pattern pair having a unary pattern pair having mutually opposite polarities from the first storage means; and machine learning means, using as training data a plurality of binary pattern pairs each having a label indicating whether or not it consists of mutually contradictory binary patterns, for learning by machine learning a function of selecting a binary pattern pair consisting of mutually contradictory patterns, and for selecting and outputting a binary pattern pair consisting of mutually contradictory binary patterns from the plurality of binary pattern pairs stored in the first storage means.

More preferably, the first classifying means outputs a binary pattern pair, adding, to the binary pattern pair, a score indicating possibility of whether the pair consists of mutually contradictory binary patterns or not; and the training data expanding means includes: score calculating means for calculating, for each group of binary pattern pairs extracted by the first classifying means, ratio of binary pattern pairs included in the group having scores equal to or higher than a predetermined threshold value as a score of each binary pattern included in the group; score establishing means for establishing, for each of the binary pattern pairs newly derived by the first classifying means, the score of each binary pattern pair by allocating highest of the scores calculated by the score calculating means for the binary pattern pairs; and adding means for selecting a prescribed number of binary pattern pairs having top scores established by the score establishing means from the binary pattern pairs newly derived by the first classifying means and for adding these to the training data.

More preferably, the adding means excludes, at the time of addition to the training data, those of the binary pattern pairs newly derived by the first classifying means which are already included in a set of binary pattern pairs extracted by the first classifying means.

Either the first or second classifying means may include classifying means based on machine learning, such as classifying means based on Support Vector Machine.

According to a second aspect, the present invention provides a computer program executed in a computer connected to entailment relation storage means for storing entailment relation of words and to a first storage device storing a plurality of binary pattern pairs. A binary pattern pair includes two binary patterns and each binary pattern includes a unary pattern as a sub pattern. The computer program causes the computer to operate as: first classifying means for extracting, by machine learning using as training data binary pattern pairs selected from the binary pattern pairs stored in the first storage device, mutually contradictory binary pattern pairs from the plurality of binary patterns stored in the first storage device; deriving means for applying, to each of the binary pattern pairs extracted by the first classifying means, the entailment relation stored in the entailment relation storage means, for rewriting one binary pattern and thereby for deriving a new binary pattern pair; training data expanding means for extracting, from the new binary patterns derived by the deriving means, binary pattern pairs highly possibly be consisting of mutually contradictory binary patterns and adding to the training data, for expanding the training data; and second classifying means for classifying, by machine learning using the expanded training data expanded by the training data expanding means, given binary pattern pairs to binary pattern pairs which are mutually contradictory and to those which are not.

BRIEF DESCRIPTION OF DRAWINGS

Fig. 1 is a schematic block diagram showing a Web question-answering system using the device for collecting contradictory expressions in accordance with an embodiment of the present invention.
Fig. 2 is a block diagram showing a schematic configuration of the device for collecting contradictory expressions shown in Fig. 1.
Fig. 3 is a schematic block diagram of a first stage contradiction pattern pair classifying unit shown in Fig. 2.
Fig. 4 is a schematic block diagram of a second stage contradiction pattern pair classifying unit shown in Fig. 2.
Fig. 5 is a block diagram showing a schematic configuration of an additional contradiction pattern pair deriving unit, a scoring unit, and a training data expanding unit shown in Fig. 4.
Fig. 6 is a graph showing results of experiments related to collection of contradictory expressions in accordance with an embodiment in comparison with accuracy attained by a conventional device.
Fig. 7 is a graph showing results of experiments related to collection of contradictory expressions in accordance with an embodiment in comparison with accuracy attained by controlled experiments.
Fig. 8 shows an appearance of a server computer realizing the Web question-answering system shown in Fig. 1.
Fig. 9 is a block diagram showing a hardware configuration of the server computer shown in Fig. 8.

DESCRIPTION OF EMBODIMENTS

In the following description and in the drawings, the same components are denoted by the same reference characters. Therefore, detailed description thereof will not be repeated.

[Configurations]

The device in accordance with an embodiment described in the following collects pattern pairs, with each pair having two elements and being mutually contradictory, such as "X promotes Y" and "X prevents Y", or "X will expel Y" and "X will reinforce Y." Each pattern has two elements such as X and Y. In the following, such a pattern will be referred to as a "binary pattern" as it has two variable elements. By collecting such binary patterns, we can easily build a system recognizing texts of contradictory expressions such as "agaricus prevents cancer" and "agaricus promotes cancer" as described above.

Further, in the embodiment described in the following, the nature of whether a pattern is excitatory/inhibitory (these two will be generally referred to as "polarity" of an expression), proposed in Non-patent literature 2, is utilized. In accordance with the proposal of Non-patent literature 2, the polarity of an expression (a sub-pattern representing a predicate including one variable element; the portion of "(verb) Y" in "X (verb) Y", such as "promotes Y", "prevents Y"; each of these will be referred to as a "unary pattern" as it has one variable element) is classified to three categories of excitatory, neutral and inhibitory. "Excitatory" means that a function, effect, object or role of the variable included in the pattern is invoked or reinforced. Examples are to "cause" of "cause Y" and to "increase" of "increase Y." In contrast, "inhibitory" represents that a function, effect, object or role of the variable included in the pattern is stopped or weakened. Examples are "prevent Y," "diminish Y" and the like. "Neutral" represents an expression that is not either excitatory or inhibitory. For example, an expression "close to Y" is neutral.

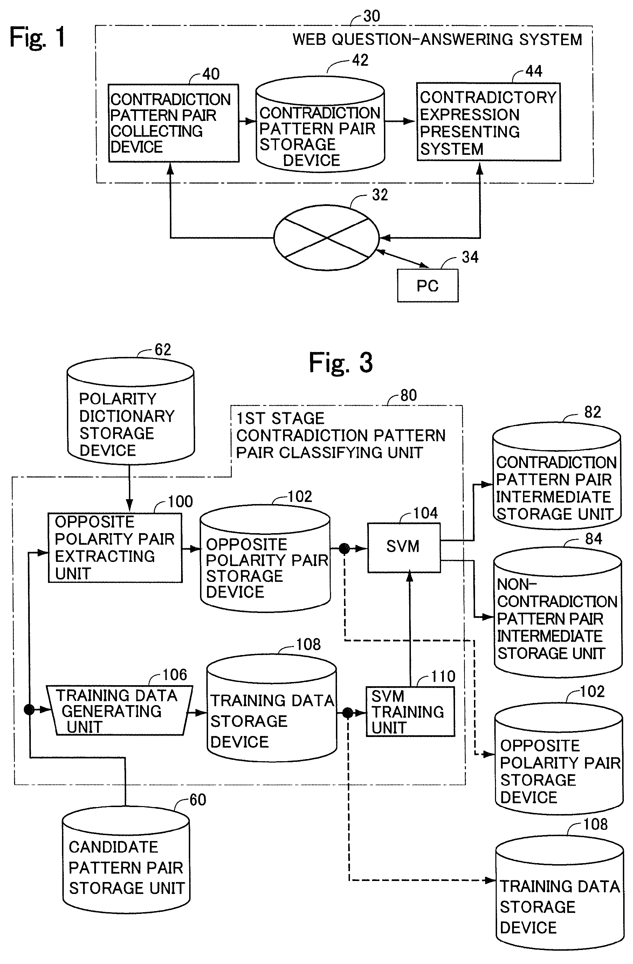

Referring to Fig. 1, a Web question-answering system 30 in accordance with the present embodiment is connected to the Internet 32, and in response to a question from a personal computer (hereinafter denoted as PC) 34, it displays in parallel a plurality of documents on the Web as candidates of answers to the question and including mutually contradictory expressions, with the contradictory portions included in answer candidates displayed in high-lighted manner. In the present embodiment, when PC 34 enters a question sentence to Web question-answering system 30, Web question-answering system 30 searches for mutually contradictory answers to the question from the Web, and returns an HTML source file representing a screen image with contradictory portions high-lighted, to PC 34. A user of PC 34 displays the HTML file on a browser and he/she can compare mutually contradictory answers to the question he/she has selected.

Web question-answering system 30 includes: a contradiction pattern pair collecting device 40 collecting a huge amount of documents from Web pages on the Internet 32 and collecting therefrom binary pattern pairs as mutually contradictory expressions; a contradiction pattern pair storage device 42 storing the contradictory expressions collected by contradiction pattern pair collecting device 40; and a contradictory expression presenting system 44, receiving an input of a question sentence from PC 34, detecting mutually contradicting expressions as answers to the question sentence from documents on the Web by using mutually contradicting expressions stored in contradiction pattern pair storage device 42, generating and returning to PC 34 a source text of a Web screen image representing these portions symmetrically in high-lighted manner. The contradictory expression presenting system 44 includes a Web server and a program executing system in a prescribed program language, both not shown. Receiving a request designating a certain program and a question sentence from PC 34, the Web server passes the designated question sentence to the designated program. The program analyzes the received question sentence, searches for and reads expressions including answer candidates to the question sentence from documents on the Web, and classifies these expressions to those mutually contradictory and those not, using a contradictory expression classifier trained using contradictory expressions stored in contradiction pattern pair storage device 42 as training data. The program further adds modification of high-light to portions of detected expressions and thereby generates HTML source texts symmetrically displaying mutually contradictory expressions in comparison with each other, and transmits the generated source texts back to PC 34.

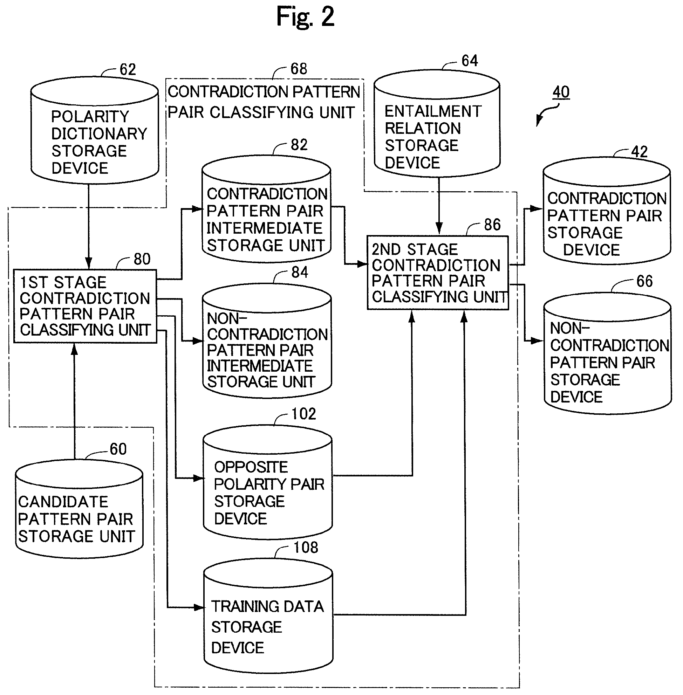

Fig. 2 shows a schematic configuration of contradiction pattern pair collecting device 40, which includes: a polarity dictionary storage device 62 storing a polarity dictionary of unary patterns; a candidate pattern pair storage device 60 storing a huge amount of binary pattern pairs collected from the Web as sets of contradiction pattern candidates; an entailment relation storage device 64 storing entailment relations of nouns/verbs and the like; and a contradiction pattern pair classifying unit 68, connected to candidate pattern pair storage device 60, polarity dictionary storage device 62 and entailment relation storage device 64, for classifying candidate pattern pairs stored in candidate pattern pair storage device 60 to contradiction pattern pairs and non-contradiction pattern pairs. The pattern pairs classified as contradiction pattern pairs by contradiction pattern pair classifying unit 68 are stored in contradiction pattern pair storage device 42. Contradiction pattern pair collecting device 40 further includes a non-contradiction pattern pair storage device 66 storing pattern pairs classified as non-contradiction pattern pairs by contradiction pattern pair classifying unit 68.

Contradiction pattern pair classifying unit 68 has a two-stage configuration. The first stage of contradiction pattern pair classifying unit 68 includes: a first-stage contradiction pattern pair classifying unit 80 including a classifier for classifying the huge amount of binary pattern pairs stored in candidate pattern pair storage device 60 to a first type of pattern pairs each having a pair of unary patterns of the same element and opposite polarities and the rest to a second type of pattern pairs; a contradiction pattern pair intermediate storage device 82 storing the first type of pattern pairs classified by the first-stage contradiction pattern pair classifying unit 80; a non-contradiction pattern pair intermediate storage device 84 storing the second type of pattern pairs classified by the first-stage contradiction pattern pair classifying unit 80; an opposite polarity pair storage device 102 storing opposite polarity pairs as pattern pairs having unary pattern portions of opposite polarities, generated by an internal work of first-stage contradiction pattern pair classifying unit 80; and a training data storage device 108 storing training data for learning of first-stage contradiction pattern pair classifying unit 80, generated by an internal work of first-stage contradiction pattern pair classifying unit 80. Data stored in contradiction pattern pair storage device 42, opposite polarity pair storage device 102 and training data storage device 108 will be the inputs to a second-stage contradiction pattern pair classifying unit 86, as will be described later.

Here, the first type of pattern pair refers to a pair of patterns such as "promote Y" and "prevent Y", that is, a pair of unary patterns having common portion "Y" and mutually opposite polarities.

The second stage of contradiction pattern pair collecting device 40 includes a second-stage contradiction pattern pair classifying unit 86, performing re-learning of the classifier using the contradiction pattern pairs stored in contradiction pattern pair intermediate storage device 82 and the entailment relations stored in entailment relation storage device 64, again classifying the candidate pattern pairs stored in candidate pattern pair storage device 50 to contradiction patterns and non-contradiction patterns using the re-learned classifier, and storing the contradiction patterns in contradiction pattern pair storage device 42 and storing non-contradiction patterns in non-contradiction pattern pair storage device 66, respectively.

Fig. 3 shows a schematic configuration of first-stage contradiction pattern pair classifying unit 80, which includes: an opposite polarity pair extracting unit 100 extracting opposite polarity pairs from candidate pattern pairs stored in candidate pattern pair storage device 60 with reference to polarity dictionary storage device 62, and storing the extracted pairs in opposite polarity pair storage device 102; and an SVM (Support Vector Machine) 104 functioning as a classifier for classifying the opposite polarity pairs stored in opposite polarity pair storage device 102 to pattern pairs considered to be mutually contradictory and pattern pairs considered to be not necessarily contradictory, and storing the former pairs in contradiction pattern pair intermediate storage device 82 and the latter pairs in non-contradiction pattern pair intermediate storage device 84. At the time of classifying the pattern pairs, SVM 104 adds, to each pattern pair, a score representing a degree of adequacy of the pattern pair to be classified as a contradiction pattern pair.

First-stage contradiction pattern pair classifying unit 80 further includes: a training data generating unit 106 performing, under an operator's control, a process for extracting pattern pairs for generating training data for SVM 104 from candidate pattern pairs stored in candidate pattern pair storage device 60 and appending necessary tags, and storing the results in training data storage device 108; and an SVM training unit 110 for training SVM 104 using the training data stored in training data storage device 108.

SVM training unit 110 generates feature vectors for training of SVM 104, from the training data stored in training data storage device 108. As elements of the feature vectors, the following are used in the present embodiment. Two types of elements are mainly used. Specifically, features of surface structure obtained from pattern contents themselves, and features related to lexicon. The table below lists features used in the present embodiment. In the table, features not belonging to the two types mentioned above are also listed as "others." These are commonly used by both the SVM 104 and an SVM in second-stage contradiction pattern pair classifying unit 86, which will be described later. It is naturally understood that selection of features is not limited to those listed in Table 1.

Table 1

| Surface structure | Similarity measures: common elements ratios; Dice coefficient, Jaccard and discounted Jaccard scores, Cosine, Euclidian, Manhattan, Levenshtein and Jaro distances (calculated for [sets of 1-gram, 2-gram and 3-gram] of [characters, morphemes, stems thereof and parts of speech] forming patterns), content words and stems thereof |
| --- | --- |
| | binary feature for each of the patterns' subtrees, 1-and 2-grams; |
| | patterns' lengths and length ratios |
| Lexicon | entries in databases of verb entailments and non-entailments, synonyms, antonyms, allographs (checked over pairs of contents words, pairs of content word stems, same for the reverse pattern pair <p, q>) |
| Others | binary feature for each semantic class pair and individual semantic classes |
| | patterns frequency rank in the given semantic class pair |

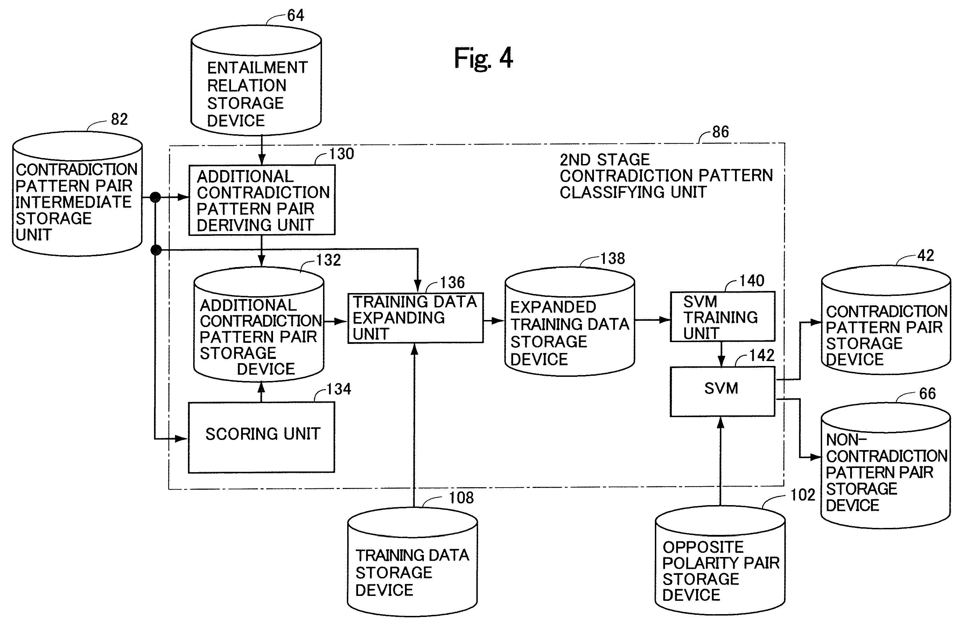

Fig. 4 shows a schematic configuration of second-stage contradiction pattern pair classifying unit 86. Second-stage contradiction pattern pair classifying unit 86 includes: an additional contradiction pattern pair deriving unit 130 for deriving, for each of the contradiction pattern pairs stored in contradiction pattern pair intermediate storage device 82, a new contradiction pattern pair by applying entailment relation stored in entailment relation storage device 64 and rewriting one of the patterns; an additional contradiction pattern pair storage device 132 storing the contradiction pattern pairs derived by additional contradiction pattern pair deriving unit 130; a scoring unit 134 for calculating, for each of the contradiction pattern pairs stored in additional contradiction pattern pair storage device 132, a sub score CDPsub necessary for calculating a measure referred to as CDP (Contradiction Derivation Precision), which will be described later, by referring to contradiction pattern pair intermediate storage device 82, and adding it to each additional contradiction pattern pair; a training data expanding unit 136, establishing score CDP for each additional contradiction pattern by using the subscore CDPsub of the additional contradiction pattern pairs stored in additional contradiction pattern pair storage device 132, merging a prescribed ratio of contradiction pattern pairs having higher scores CDP with the training data stored in training data storage device 108 (see Fig. 3) and thereby expanding the training data; and an expanded training data storage device 138 storing the training data output from training data expanding unit 136.

Second-stage contradiction pattern pair classifying unit 86 further includes: an SVM 142 classifying the candidate pattern pairs stored in candidate pattern pair storage device 60 to contradiction pattern pairs and non-contradiction pattern pairs and storing the contradiction pattern pairs in contradiction pattern pair storage device 42 and non-contradiction pattern pairs in non-contradiction pattern pair storage device 66, respectively; and an SVM training unit 140 for training SVM 142 using the expanded training data stored in expanded training data storage device 138. Specifically, SVM training unit 140 classifies the candidate pattern pairs using the training data originally obtained and stored in training data storage device 108 as well as training data including the contradiction pattern pairs added by additional contradiction pattern pair deriving unit 130, scoring unit 134 and training data expanding unit 136. It has been confirmed through experiments that accuracy of classification by SVM 142 having such a configuration becomes higher than the accuracy of classification by the first-stage SVM 104. The results of experiments will be discussed later.

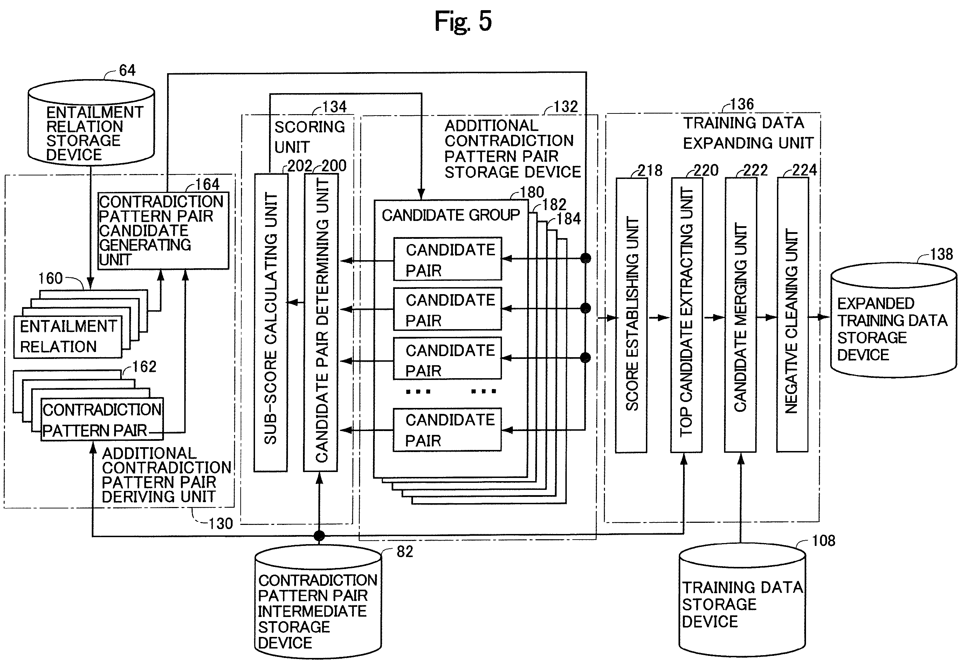

Referring to Fig. 5, functions of additional contradiction pattern pair deriving unit 130, additional contradiction pattern pair storage device 132, scoring unit 134 and training data expanding unit 136 shown in Fig. 4 will be described.

Additional contradiction pattern pair deriving unit 130 includes a contradiction pattern pair candidate generating unit 164 for generating a new contradiction pattern pair by reading contradiction pattern pairs 162 from contradiction pattern pair intermediate storage device 82, applying entailment relation 160 read from entailment relation storage device 64 to one of the patterns of each of the pattern pairs and thereby rewriting it. The logical constraint for the expansion is as follows.

If a pattern p entails a pattern q and pattern q contradicts a third pattern r, then pattern p must contradict r. For example, because "X causes Y" (pattern p) entails "X promotes Y" (pattern q) and pattern q contradicts "X prevents Y" (pattern r), then we conclude that pattern p contradicts pattern r. Here, the contradiction pattern pair <q, r> consisting of patterns q and r is called a source pattern pair, and the contradiction pattern pair <p, r> consisting of patterns p and r is called an expanded pattern pair.

Additional contradiction pattern pair storage device 132 stores candidate groups 180, 182 and 184 consisting of candidates (candidate pairs) of contradiction pattern pairs generated by contradiction pattern pair candidate generating unit 164.

Scoring unit 134 includes: a candidate pair determining unit 200 determining, for each of the candidate groups 180, 182, 184 and the like, whether or not the score at the time of classification by SVM 104 (see Fig. 3) of candidate pairs in the candidate group is larger than a prescribed threshold value $\alpha$, and depending on the result of determination, adding a flag having a value 1 or 0 to each candidate pair; and a sub score calculating unit 202 calculating, for each of the candidate groups 180, 182, 184 and the like, a sub score CDPsub in accordance with the equation below based on the flag added to each candidate pair in the group by candidate pair determining unit 200, and writing it as a sub score CDPsub of each candidate pair belonging to the candidate group, to candidate groups 180, 182, 184 and the like. The threshold value $\alpha$ may be determined appropriately beforehand using development data.

The sub score CDPsub (q, r) over a source contradiction pattern pair <q, r> is defined as follows.

$$CDPsub(q,r) = \frac{\left|\left\{\langle p,r \rangle \in Ex(q,r) \middle| Sc(p,r) > \alpha \right\}\right|}{\left|Ex(q,r)\right|}$$

Here, Ex(q, r) is the set of expanded pattern pairs derived from a source pair <q, r>, and Sc is the score given by SVM 104 to the source pattern pair. In the experiments as will be described later, we set $\alpha = 0.46$. This value was selected such that the pattern pairs for which SVM 104 gives a score over $\alpha$ correspond to the top 5% of the outputs of SVM 104.

Training data expanding unit 136 includes a score establishing unit 218 establishing, in response to addition of sub score CDPsub to every candidate pair included in candidate groups 180, 182, 184 and the like by scoring unit 134, the value of score CDP for each candidate pair in accordance with the equation below.

$$CDP(p,r) = \max_{(q,r) \in Source(p,r)} CDPsub(q,r)$$

Among the candidate pairs already given the score CDP stored in additional contradiction pattern pair storage device 132, identical contradiction pattern pairs separately derived from a plurality of contradiction pattern pairs may exist. Since contradiction patterns from which they are derived differ, generally, these pattern pairs have different score CDPs. If such candidate pairs exist, score establishing unit 218 gives the maximum value of sub score CDPsub calculated by the equation above for the candidate pair by sub score calculating unit 202 as the score CDP of the candidate pair.

Training data expanding unit 136 further includes: a top candidate extracting unit 220 sorting the candidate pairs in descending order of CDP and extracting top N candidate pairs; a candidate merging unit 222 merging the candidate pairs extracted by top candidate extracting unit 220 with the training data stored in training data storage device 108 and outputting new training data; and a negative cleaning unit 224 performing a negative cleaning process for removing contradiction pattern pairs conflicting newly added candidate data from the training data output from candidate merging unit 222.

Among the candidate pairs already given the scores stored in additional contradiction pattern pair storage device 132, identical contradiction pattern pairs separately derived from a plurality of contradiction pattern pairs may exist. Since contradiction patterns from which they are derived differ, generally, these pattern pairs have different CDPs. If such candidate pairs exist, top candidate extracting unit 220 gives the maximum value calculated by sub score calculating unit 202 as CDP of the candidate pair.

After the CDP of each candidate pair is established by score establishing unit 218, top candidate extracting unit 220 extracts only those candidate patterns which are not in the set of contradiction pattern pairs stored in contradiction pattern pair intermediate storage decice 82, and outputs top N thereof to candidate merging unit 222. Specifically, top candidate extracting unit 220 removes those of the candidate patterns which are already stored in contradiction pattern pair intermediate storage device 82, from the object of addition.

The process by negative cleaning unit 224 is necessary for attaining consistency of training data. Here, of the contradiction pattern pairs obtained through classification by SVM 104, those conflicting with the pattern pairs added by candidate merging unit 222 are removed. Of the pattern pairs, the pair of content words is considered to be the strongest ground as to whether the pair of patterns contradicts with each other. Therefore, here, of the contradiction pattern pairs obtained at the beginning, contradiction pattern pairs having common content word or words with any of the newly added contradiction pattern pairs (referred to as negative samples) are removed.

The process above described as pseudo-code is as follows.

---

1: **procedure** EXPAND(C, E)

2:     Compute the set of expanded pairs $C' = \{\langle p, r \rangle |$

    $\exists_q : \langle p, q \rangle \in E, \langle q, r \rangle \in C\}$.

3:     Rank the pairs in $C'$ using *CDP.*

4:     Add the N top-ranked pairs in $C' \setminus C$ as new positive     samples to $Train_{base}$.

5:     Remove incoherent negative training samples using     *negative cleaning.*

6:     **end procedure**

---

[Operation]

Contradiction pattern pair collecting device 40 having the above-described configuration operates in the following manner. Referring to Fig. 2, candidate pattern pair storage device 60 stores a large number of candidate pattern pairs obtained by crawling web pages on the Internet 32. Existing techniques may be applied to the collection of candidate pattern pairs. In candidate pattern pairs collected here, the pattern is a word sequence on the path of dependency relations connecting two nouns in a syntactic dependency tree (such as "X causes Y"). To portions corresponding to X and Y of this pattern, pieces of information representing types of these words are added beforehand as tags. "Y organization exists at X $_{location}$" is an example. Here, subscripts (organization, location) indicate semantic classes of the X and Y slots. Since semantic classes can distinguish between multiple senses of ambiguous patterns, they greatly reduce errors due to pattern ambiguity.

In the present embodiment, we use polarity dictionary storage device 62 manually prepared in advance. The entailment relationship stored in entailment relation storage device 64 may be manually prepared or may be prepared using a classifier trained by machine learning using manually prepared training data.

Referring to Fig 3, first-stage contradiction pattern pair classifying unit 80 shown in Fig. 2 reads candidate pattern pairs from candidate pattern pair storage device 60, and by looking up polarity dictionary storage device 62, determines whether or not the polarities of unary pattern portions of the patterns forming the pair are opposite (excitatory and inhibitory). Further, first-stage contradiction pattern pair classifying unit 80 selects pattern pairs having opposite polarities and stores them in opposite polarity pair storage device 102.

On the other hand, an operator extracts candidate patterns to be training data from candidate pattern pair storage device 60 using training data generating unit 106, and adds tags indicating whether or not each candidate pattern pair consists of mutually contradicting patterns, and thereby generates training data. The training data are stored in training data storage device 108. SVM training unit 110 generates feature vectors for learning of SVM 104 from the training data stored in training data storage device 108, and conducts learning of SVM 104. Here again, training data prepared manually beforehand is used for learning of SVM 104. It is noted, however, that the data may not be directly prepared manually, and data classified and labeled by a learned classifier may be used as the training data. Further, a method of generating training data that does not require any manual determination may be used.

In accordance with the result of learning, SVM 104 classifies each of the candidate pattern pairs having mutually opposite polarities stored in opposite polarity pair storage device 102 to contradiction pattern pairs and non-contradiction pattern pairs, and stores them in contradiction pattern pair intermediate storage device 82 and non-contradiction pattern pair intermediate storage device 84, respectively. Here, SVM 104 gives SVM score to each of the output pattern pairs. If it is highly possible that a pattern pair is a contradiction pattern pair, the score will be high, and otherwise, the score will be low.

Referring to Fig. 4, additional contradiction pattern pair deriving unit 130 reads contradiction pattern pairs from contradiction pattern pair intermediate storage device 82, and for each read pair, generates an additional contradiction pattern pair using the entailment relationship read from entailment relation storage device 64, and stores the generated pattern pairs in additional contradiction pattern pair storage device 132.

When generation of additional contradiction pattern pairs by additional contradiction pattern pair deriving unit 130 is completed, scoring unit 134 calculates CDP of each contradiction pattern pair. Referring to Fig. 5, here, candidate pair determining unit 200 determines, for each of the candidate pairs as the additional contradiction pattern pair generated from a certain contradiction pattern pair 162, whether its score is equal to or higher than the threshold value α, and adds a flag to each candidate pair. Based on the flag, sub score calculating unit 202 calculates CDP sub for every candidate pair in the candidate group generated from the certain contradiction pattern pair 162, and allocates these to the candidate group.

Score establishing unit 218 of training data expanding unit 136 establishes CDP of each candidate pair, by allocating, to a candidate pair derived from a plurality of contradiction patterns among the additional contradiction pattern pairs stored in additional contradiction pattern pair storage device 132, the maximum CDPsub allocated to the candidate pair, and allocating, to other candidate pairs, CDPsub as the CDP. Top candidate extracting unit 220 extracts, from the candidate pairs stored in additional contradiction pattern pair storage device 132, those out of the set of top 5% scores in the contradiction pattern pairs stored in contradiction pattern pair intermediate storage device 82, and of these, outputs top N to candidate merging unit 222 of training data expanding unit 136.

Candidate merging unit 222 merges the candidate pairs output from top candidate extracting unit 220 with those stored in training data storage device 108, and outputs results to negative cleaning unit 224.

From the training data output from candidate merging unit 222, negative cleaning unit 224 removes those conflicting with the newly added candidate pairs, and stores the remaining training data in expanded training data storage device 138.

Again referring to Fig. 4, SVM training unit 140 generates feature vectors for learning of SVM 142 from the training data stored in expanded training data storage device 138, and conducts learning of SVM 142. The learned SVM 142 classifies anew the candidate pattern pairs contained in candidate pattern pair storage device 60, and new sets of contradiction pattern pairs and non-contradiction pattern pairs are obtained. These are stored in contradiction pattern pair storage device 42 and non-contradiction pattern pair storage device 66, respectively.

Accuracy of contradiction pattern pairs in contradiction pattern pair storage device 42 obtained in this manner was confirmed by experiments as will be described in the following, and it was confirmed that the performance was clearly improved over the prior art.

[Experiment 1]

In the embodiment above, only the candidate pattern pairs having opposite polarities are used when training data are extracted, by opposite polarity pair extracting unit 100 shown in Fig. 3. The effect of this approach was confirmed by the experiment.

In the experiments, the binary patterns and their co-occurring noun pairs were extracted from 600 million Japanese web pages dependency-parsed with KNP (Reference 1 as listed below). We restricted the patterns to the most frequent 3.9 million patterns (of the form "X-[case particle] Y-[case particle] predicate" such as "X-ga Y-ni aru" ("X is in Y")), which do not contain any negation, number, symbol or punctuation character. Based on an observation that patterns in meaningful contradiction pattern pairs tend to share co-occurring noun pairs, we used as inputs to classifiers the set Pall of 792 million pattern pairs for which both patterns share three co-occurring noun pairs.

Further, considering that unary patterns with opposite polarity have a higher chance to be contradictions, by opposite polarity pair extracting unit 100, a set Popp of binary pattern pairs that contain unary patterns with opposite polarities was selected from the set Pall. Polarity dictionary storage device 62 used here stored 6,470 unary patterns of which polarities were hand-labeled. Of these 4,882 were labeled excitatory and 1,558 inhibitory.

The set Popp contained 8 million unary pattern pairs with roughly 38% true contradiction pairs, which were input to SVM 104 (see Fig. 3).

The work by training data generating unit 106 was prepared by majority vote of three human operators. As a result we had training data stored in training data storage device 108 including 796 patterns, of which 238 were labeled as contradiction pairs and 558 were non-contradiction pairs. These unary pattern pairs were selected among pairs with high distributional similarity, regardless of whether the polarity is opposite or not.

We then extracted from the set Pall 256,000 pattern pairs containing a contradictory unary pattern pair, and 5.2 million pattern pairs containing a non-contradictory unary pattern pair. These are used as positive training data and negative training data, respectively.

The composition of training data to be stored in training data storage device 108 was determined beforehand using development data. For this determining process, 1,000 manually labeled samples were used. Twenty different classifiers were trained using from 6,250 to 50,000 positive samples (4 sets) and 12,500 to 200,000 negative samples (5 sets), doubling the amounts in each step. The resulting optimal training data set consisted of 12,500 positive samples and 100,000 negative samples, which were used in the experiments.

To train SVM, TinySVM (see Reference 2 as listed below) with a polynominal kernel of degree 2 was used.

This setting showed the best performance during preliminary experiments.

With this setting, an experiment was conducted to examine the effect of restricting the input patterns to opposite polarity pair storage device 102 to pattern pairs having opposite polarities. For the experiment, a test set of 2,000 manually labeled samples and 250 manually labeled by majority vote of three operators from top scores of the set Pall were used as inputs to SVM 104, and top 2 million pattern pairs of both Popp and Pall sets were classified, with the results indicated by precision curves.

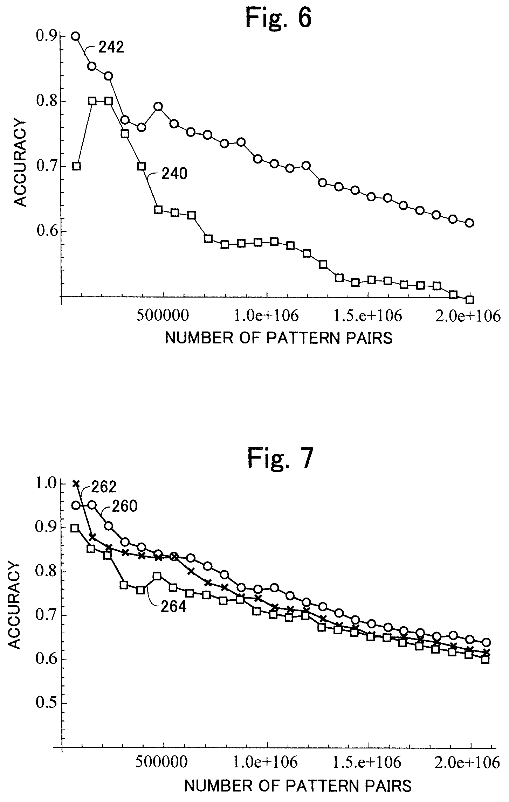

The precision curve of Fig. 6 shows, on the ordinate, the precision of set of pattern pairs (ratio of the number of patterns of which classification results are correct to the number of pattern pairs taken out), when pattern pairs are sorted in descending order in accordance with the scores of classification results and the number of patterns as indicated on the abscissa were taken out from the top. As shown in Fig. 6, the precision curve 242 obtained for the set Popp was considerably higher than the precision curve 240 obtained for the set Pall. Specifically, it was confirmed that by restricting the candidate pattern pairs to those having opposite polarities by using opposite polarity pair extracting unit 100, precision could be improved.

[Experiment 2]

In Experiment 2 also, the development set and the test set were used as described above. For this purpose, we asked three human operators to label 3,000 binary patterns as contradiction pattern pairs or non-contradiction pattern pairs. The 3,000 pattern pairs were randomly selected from the set Popp. Of the 3,000 pattern pairs, 1,000 were used as the development set and 2,000 were used as the test set. In labeling by three operators, the label of pattern pair was determined by majority vote. The development set was the same as the data of 1,000 samples manually labeled, used in Experiment 1 for determining the composition of training data to be stored in training data storage device 108.

As a definition of "contradiction", we used the notion of incompatibility (that is, two statements are extremely unlikely to be simultaneously true) proposed in an article listed below as Reference 3. Therefore, we can say pattern pairs such as "X causes Y" and "X prevents Y" are contradictory if the above condition holds for any noun pair that can instantiate the patterns' variables in the semantic class of these patterns.

In the experiment, the following three results of classification were compared. Results are as shown in Fig. 7.

- PROPOSED: [Precision curve 260] the output from SVM 142 of the embodiment above. The number N of pattern pairs added to the training data was set to 6,000 that attained the highest precision in preliminary experiments using development set.

- BASE: [Precision curve 264] the output from SVM 104 shown in Fig. 3.

- PROP-SCORE: [Precision curve 262] Basically the same as PROPOSED except for the use of score of SVM 104 instead of score CDP. The number N was set to 30,000.

Referring to Fig. 7, PROPOSED indicated higher precision than BASE. PROPOSED acquired 750,000 contradiction pattern pairs with an estimated precision of 80%. Matching of these contradiction pattern pairs against an antonyms dictionary revealed that only 100,886 of these pattern pairs contain an antonym pair. This means that the extracted contradiction pattern pairs include large number of pairs representing more complex semantic contradictions than simple antonymy.

With the same precision of 80%, BASE and PROP-SCORE acquired only 285,000 and 636,000 contradiction pattern pairs, respectively. This implies that the two-stage method of extracting contradiction pattern pairs in accordance with the embodiment can more than double the number of contradiction pattern pairs that are correctly extracted, can increase their variety, and that use of score CDP when adding candidate pairs to the training data in the second stage enables extraction of larger number of contradiction pattern pairs with higher precision than the method of using the score by SVM 104 of the first stage.

[Computer Implementation]

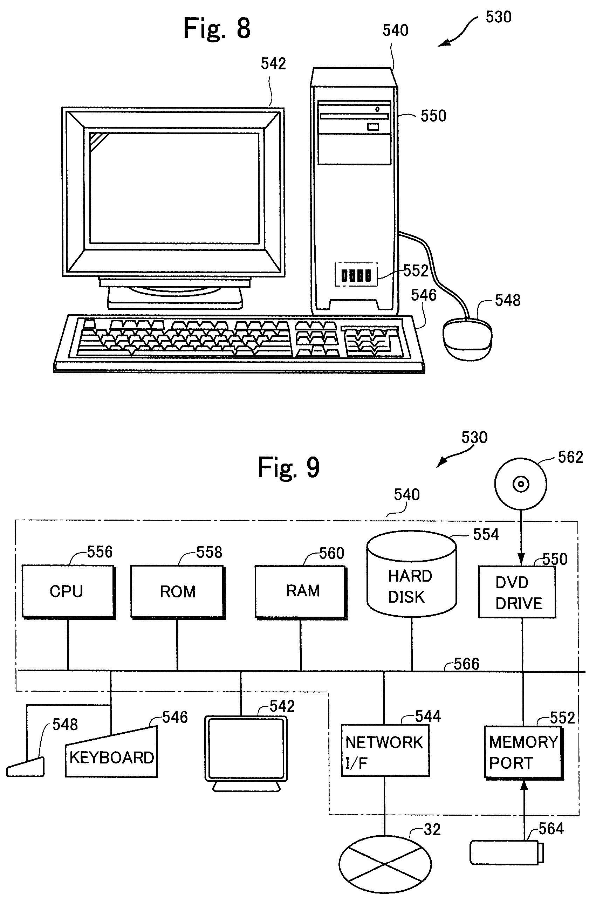

The contradiction pattern pair collecting device 40 in accordance with the above-described embodiment can be implemented by computer hardware and a computer program running on the computer hardware. Fig. 8 shows an appearance of computer system 530 and Fig. 9 shows an internal configuration of computer system 530.

Referring to Fig. 8, computer system 530 includes a computer 540 having a memory port 552 and a DVD (Digital Versatile Disc) drive 550, a keyboard 546, a mouse 548 and a monitor 542.

Referring to Fig. 9, in addition to memory port 552 and DVD drive 550, computer 540 includes a CPU (Central Processing Unit) 556, a bus 566 connected to CPU 556, memory port 552 and DVD drive 550, a read-only memory (ROM) 558 for storing a boot program and the like, a random access memory (RAM) 560 connected to bus 566 and storing program instructions, a system program and work data, and a hard disk 554. Computer system 530 further includes a network interface (I/F) 544 providing a connection to the Internet 32, enabling communication with other terminals.

The computer program causing computer system 530 to function as various functional units of contradiction pattern pair collecting device 40 in accordance with the above-described embodiment is stored in a DVD 562 or a removable memory 564 loaded to DVD drive 550 or memory port 552, and transferred to hard disk 554. Alternatively, the program may be transmitted to computer 540 through the Internet 32 and stored in hard disk 554. The program is loaded to RAM 560 at the time of execution. The program may be directly loaded to RAM 560 from removable memory 564, or through the Internet 32.

The program includes a sequence of instructions consisting of a plurality of instructions causing computer 540 to function as various functional units of contradiction pattern pair collecting device 40 in accordance with the embodiment above. Some of the basic functions necessary to cause computer 540 to operate in this manner may be statically linked at the time of creating the program or dynamically linked at the time of executing the program, by the operating system running on computer 540, by a third-party program, or various programming tool kits or program library (for example, a computer program library for SVM) installed in computer 540. Therefore, the program itself may not include all functions to realize the system and method of the present embodiment at the time of circulation. The program may include only the instructions that call appropriate functions or appropriate program tools in the programming tool kits or in the program library in a controlled manner to attain a desired result and thereby to realize the functions of the system described above. Naturally, the program itself may have all necessary functions statically linked so that it can operate without any other resources.

[Reference/Web pages list]

<Reference 1> S. Kurohashi and M. Nagao. 1994. KN parser: Japanese dependency/case structure analyzer. In Proceedings of the Workshop on Sharable Natural Language Resources, page 48-55.

<Reference 2> http://chasen.org/~taku/software/TinySVM/

<Reference 3> M.-C. De Marneffe, A. N. Rafferty, and C. D. Manning. 2008. Finding contradictions in text. Proceedings of ACL 2008, page 1039-1047.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

By way of example, an SVM is used as a classifier. The present invention, however, is not limited to such an embodiment. For instance, a Naive Bayes classifier, or a classifier trained by supervised learning with maximum entropy model may be used.

INDUSTRIAL APPLICABILITY

The present invention can be used for collecting mutually contradictory expressions from everyday languages. Further, the present invention can be used, for example, when presses, publishers, general companies or individuals offer information, to verify correctness of contents by finding contradictory expressions, or to verify logics of information to prevent confusion of readers due to use of contradictory expressions related to one same object. Particularly, when it is difficult to verify reliability and a huge amount of information circulates in a short period of time such as at the time of a disaster, the present invention can be used to help presses, administrative organizations and individuals to choose good pieces of information and to behave appropriately.

REFERENCE SIGNS LIST

| | |
|---|---|
| 30 | Web question-answering system |
| 32 | Internet |
| 34 | PC |
| 40 | contradiction pattern pair collecting device |
| 42 | contradiction pattern pair storage device |
| 44 | contradictory expression presenting system |
| 60 | candidate pattern pair storage device |
| 62 | polarity dictionary storage device |
| 64 | entailment relation storage device |
| 66 | non-contradiction pattern pair storage device |
| 68 | contradiction pattern pair classifying unit |
| 80 | first-stage contradiction pattern pair classifying unit |
| 82 | contradiction pattern pair intermediate storage device |
| 84 | non-contradiction pattern pair intermediate storage device |
| 86 | second-stage contradiction pattern pair classifying unit |
| 100 | opposite polarity pair extracting unit |
| 102 | opposite polarity pair storage unit |
| 104,142 | SVM |
| 106 | training data generating unit |
| 108 | training data storage device |
| 110, 140 | SVM training unit |
| 130 | additional contradiction pattern pair deriving unit |
| 132 | additional contradiction pattern pair storage device |
| 134 | scoring unit |
| 136 | training data expanding unit |
| 138 | expanded training data storage device |
| 200 | candidate pair determining unit |
| 202 | sub score calculating unit |
| 218 | score establishing unit |
| 220 | top candidate extracting unit |
| 222 | candidate merging unit |
| 224 | negative cleaning unit |

## Claims

1. A device for collecting contradictory expressions used connected to entailment relation storage means for storing entailment relation of words and to a first storage device storing a plurality of binary pattern pairs, wherein
   a binary pattern pair includes two binary patterns and each binary pattern includes a unary pattern as a sub pattern;
   said device for collecting contradictory expressions comprising:

   first classifying means for extracting, by machine learning using as training data binary pattern pairs selected from the binary pattern pairs stored in said first storage device, mutually contradictory binary pattern pairs from said plurality of binary patterns stored in said first storage device;
   deriving means for applying, to each of the binary pattern pairs extracted by said first classifying means, the entailment relation stored in said entailment relation storage means, for rewriting one binary pattern and thereby for deriving a new binary pattern pair;
   training data expanding means for extracting, from the new binary patterns derived by said deriving means, binary pattern pairs highly possibly be consisting of mutually contradictory binary patterns and adding to said training data, for expanding said training data; and
   second classifying means for classifying, by machine learning using the expanded training data expanded by said training data expanding means, given binary pattern pairs to binary pattern pairs which are mutually contradictory and to those which are not.

2. The device for collecting contradictory expressions according to claim 1, used further connected to polarity storage means for storing polarities of unary patterns; wherein
   said first classifying means includes
   first pattern pair extracting means for extracting, using the polarities of unary patterns stored in said polarity storage means, a binary pattern pair having a unary pattern pair having mutually opposite polarities from said first storage means, and

machine learning means, using as training data a plurality of binary pattern pairs each having a label indicating whether or not it consists of mutually contradictory binary patterns, for learning by machine learning a function of selecting a binary pattern pair consisting of mutually contradictory patterns, and for selecting and outputting a binary pattern pair consisting of mutually contradictory binary patterns from said plurality of binary pattern pairs stored in said first storage means.

3. The device for collecting contradictory expressions according to claim 2, wherein

said first classifying means outputs a binary pattern pair, adding, to the binary pattern pair, a score indicating possibility of whether the pair consists of mutually contradictory binary patterns or not; and

said training data expanding means includes

score calculating means for calculating, for each group of binary pattern pairs extracted by said first classifying means, ratio of binary pattern pairs included in the group having scores equal to or higher than a predetermined threshold value as a score of each binary pattern included in the group,

score establishing means for establishing, for each of the binary pattern pairs newly derived by said first classifying means, the score of each binary pattern pair by allocating highest of the scores calculated by said score calculating means for the binary pattern pairs, and

adding means for selecting a prescribed number of binary pattern pairs having top scores established by said score establishing means from the binary pattern pairs newly derived by said first classifying means and for adding these to said training data.

4. The device for collecting contradictory expressions according to any of claims 1 to 3, wherein

said adding means excludes, at the time of addition to said training data, those of the binary pattern pairs newly derived by said first classifying means which are already included in a set of binary pattern pairs extracted by said first classifying means.

5. The device for collecting contradictory expressions according to any of claims 1 to 4, wherein

either said first or second classifying means includes classifying means based on machine learning.

6. A computer program causing a computer connected to entailment relation storage means for storing entailment relation of words and to a first storage device storing a plurality of binary pattern pairs to function as a device for collecting contradictory expressions, wherein

a binary pattern pair includes two binary patterns and each binary pattern includes a unary pattern as a sub pattern; said computer program causes said computer to operate as

first classifying means for extracting, by machine learning using as training data binary pattern pairs selected from the binary pattern pairs stored in said first storage device, mutually contradictory binary pattern pairs from said plurality of binary patterns stored in said first storage device;

deriving means for applying, to each of the binary pattern pairs extracted by said first classifying means, the entailment relation stored in said entailment relation storage means, for rewriting one binary pattern and thereby for deriving a new binary pattern pair;

training data expanding means for extracting, from the new binary patterns derived by said deriving means, binary pattern pairs highly possibly be consisting of mutually contradictory binary patterns and adding to said training data, for expanding said training data; and

second classifying means for classifying, by machine learning using the expanded training data expanded by said training data expanding means, given binary pattern pairs to binary pattern pairs which are mutually contradictory and to those which are not.

## Fig. 1

┌─────────────────────────────────────────────────────────────────────┐
│ ⌐30                                                                   │
│                    WEB QUESTION-ANSWERING SYSTEM                      │
│                                                                       │
│   ⌐40               ⌐42                    ⌐44                        │
│  ┌──────────────┐  ┌──────────────┐      ┌──────────────┐            │
│  │CONTRADICTION │  │CONTRADICTION │      │CONTRADICTORY │            │
│  │PATTERN PAIR  │→ │PATTERN PAIR  │  →   │EXPRESSION    │            │
│  │COLLECTING    │  │STORAGE       │      │PRESENTING    │            │
│  │DEVICE        │  │DEVICE        │      │SYSTEM        │            │
│  └──────────────┘  └──────────────┘      └──────────────┘            │
│         ↑                                        ↑                    │
└─────────────────────────────────────────────────────────────────────┘
          │                  ⌐32                   │
          │              ┌─────────┐               │
          └──────────────│    ✕    │───────────────┘
                         └─────────┘
                              ↕  ⌐34
                          ┌────────┐
                          │   PC   │
                          └────────┘

## Fig. 3

# Fig. 2

POLARITY DICTIONARY STORAGE DEVICE ⌐62

CONTRADICTION PATTERN PAIR CLASSIFYING UNIT ⌐68

ENTAILMENT RELATION STORAGE DEVICE ⌐64

40

CONTRADICTION PATTERN PAIR STORAGE DEVICE ⌐42

CONTRADICTION PATTERN PAIR INTERMEDIATE STORAGE UNIT ⌐82

1ST STAGE CONTRADICTION PATTERN PAIR CLASSIFYING UNIT ⌐80

2ND STAGE CONTRADICTION PATTERN PAIR CLASSIFYING UNIT ⌐86

NON-CONTRADICTION PATTERN PAIR INTERMEDIATE STORAGE UNIT ⌐84

NON-CONTRADICTION PATTERN PAIR STORAGE DEVICE ⌐66

CANDIDATE PATTERN PAIR STORAGE UNIT ⌐60

OPPOSITE POLARITY PAIR STORAGE DEVICE ⌐102

TRAINING DATA STORAGE DEVICE ⌐108

Fig. 4

64 ENTAILMENT RELATION STORAGE DEVICE

82 CONTRADICTION PATTERN PAIR INTERMEDIATE STORAGE UNIT

86 2ND STAGE CONTRADICTION PATTERN CLASSIFYING UNIT

130 ADDITIONAL CONTRADICTION PATTERN PAIR DERIVING UNIT

132 ADDITIONAL CONTRADICTION PATTERN PAIR STORAGE DEVICE

134 SCORING UNIT

136 TRAINING DATA EXPANDING UNIT

138 EXPANDED TRAINING DATA STORAGE DEVICE

140 SVM TRAINING UNIT

142 SVM

42 CONTRADICTION PATTERN PAIR STORAGE DEVICE

66 NON-CONTRADICTION PATTERN PAIR STORAGE DEVICE

108 TRAINING DATA STORAGE DEVICE

102 OPPOSITE POLARITY PAIR STORAGE DEVICE

EP 3 057 003 A1

Fig. 5

## Fig. 6

## Fig. 7

## Fig. 8

## Fig. 9

**INTERNATIONAL SEARCH REPORT**

| International application No. |
|---|
| PCT/JP2014/076730 |

A. CLASSIFICATION OF SUBJECT MATTER
*G06F17/30*(2006.01)i

According to International Patent Classification (IPC) or to both national classification and IPC

B. FIELDS SEARCHED

Minimum documentation searched (classification system followed by classification symbols)
G06F17/30

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | Julien Kloetzer et al., "Gan'i Kankei o Mochiita Pattern-kan Mujun Kankei Kakutoku", Proceedings of the 20th Annual Meeting of the Association for Natural Language Processing, 10 March 2014 (10.03.2014), pages 344 to 347 | 1-6 |
| A | JP 2013-175097 A (National Institute of Information and Communications Technology), 05 September 2013 (05.09.2013), entire text; all drawings & WO 2013/128984 A1 | 1-6 |
| A | JP 2012-128468 A (National Institute of Information and Communications Technology), 05 July 2012 (05.07.2012), entire text; all drawings (Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 December, 2014 (08.12.14) | 16 December, 2014 (16.12.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2014/076730

C (Continuation).   DOCUMENTS CONSIDERED TO BE RELEVANT

| Category* | Citation of document, with indication, where appropriate, of the relevant passages | Relevant to claim No. |
|---|---|---|
| A | Tetsuji NAKAGAWA et al., "Web Jo no Kyakkanteki Kijutsu kara no Hyoka Joho Chushutsu ni Kansuru Gijutsuteki Kento", Proceedings of the 14th Annual Meeting of the Association for Natural Language Processing, 17 March 2008 (17.03. 2008), pages 344 to 347 | 1-6 |
| A | Daisuke KAWAHARA et al., "Grasping Major Topics and their Contradictions toward Information Credibility Analysis of Web Contents", IPSJ SIG Notes, 10 July 2008 (10.07.2008), vol.2008, no.67, pages 49 to 54 | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. OHKI ; S. MATSUYOSHI ; J. MIZUNO ; K. INUI ; E. NICHOLS ; K. MURAKAMI ; S. MASUDA ; Y. MATSUMOTO.** Recognizing confinement in web texts. *In the Proceedings of the Ninth International Conference on Computational Semantics,* 2011, 215-224
- **HASHIMOTO, K. ; TORISAWA, S. ; DE SAEGER, J.-H. OH ; J. KAZAMA.** Excitatory or inhibitory: A new semantic orientation extracts contradiction and causality from the web. *In Proceedings of EMNLP 2012,* 2012

- **S. KUROHASHI ; M. NAGAO.** KN parser: Japanese dependency/case structure analyzer. *In Proceedings of the Workshop on Sharable Natural Language Resources,* 1994, 48-55
- **M.-C. DE MARNEFFE ; A. N. RAFFERTY ; C. D. MANNING.** Finding contradictions in text. *Proceedings of ACL 2008,* 2008, 1039-1047